**Europäisches Patentamt**

**European Patent Office**

**Office européen des brevets**

(19)

(11) Publication number: **0 025 674**
A1

(12)

# EUROPEAN PATENT APPLICATION

(21) Application number: **80303109.5**

(22) Date of filing: **04.09.80**

(51) Int. Cl.³: **B 60 C 7/10,** B 60 C 7/12

(30) Priority: **04.09.79 US 72108**

(43) Date of publication of application: **25.03.81**
**Bulletin 81/12**

(84) Designated Contracting States: **DE FR GB IT**

(71) Applicant: **Roberts, George, 33 Douglass Drive South, Broomfield Colorado 80020 (US)**

(72) Inventor: **Roberts, George, 33 Douglass Drive South, Broomfield Colorado 80020 (US)**

(74) Representative: **Simpson, Ronald Duncan Innes et al, A.A.Thornton & Co. Northumberland House 303-306 High Holborn, London WCIV 7LE (GB)**

(54) **Non-flattening non-pneumatic tire and method of forming the same.**

(57) A non-flattening, non-pneumatic tire comprises a tire casing (20) mounted on a wheel rim and a thick-walled tube (25) essentially of natural rubber disposed within the casing, the tube having a length at least about ¹/₂ inch (1.27 cm) greater than the length of the casing measured at its centre so that the tube is compressed lengthwise when forced into the casing. The ratio of the tube outer diameter to its overall thickness is from 2.00 to 7.50. The ends of the tube may be fixed together to form a ring. According to the method, one bead (21, 22) of the casing is positioned on the wheel rim, the tube is lubricated and forced into the casing and is centred on the rim before the second bead of the casing is located on the rim.

NON-FLATTENING NON-PNEUMATIC TIRE
AND METHOD OF FORMING THE SAME

This invention concerns a non-flattening, non-pneumatic vehicle tire, and in particular an inner tube for insertion in the casing of such a tire.

Pneumatic tires for all types of vehicles are well known and have been used for many years. One disadvantage of a pneumatic tire is that it deflates when punctured. Numerous attempts have been made to make a tire with no air under pressure but which has equivalent characteristics of a pneumatic tire. These include solid rubber tires, sponge rubber inner tubes, and perforated inner tubes all descriptions, but none have found favour with the purchasing public. For example, such devices as shown in the patent art have failed to reach commercial embodiments. Huffman U.S. Patent No. 1,287,694 of December 17, 1918 is an early attempt to provide a tube without air, but it is obviously expensive due to the shape including a rib for contacting a rim. Price U.S. Patent No. 1,585,875 of May 25, 1926 uses a combined pneumatic tube for insertion into a sponge rubber tire liner. Brunswick U.S. Patent No. 2,017,649, October 15, 1935, shows a tube with a plurality of inside projections to apparently provide strength to the tube. Connolly, U.S. Patent No. 1,449,588 shows a solid rubber tube with included closed cells containing a fluid. Smith U.S. Patent No. 1,439,197 of December 19, 1922 shows a solid rubber tube with a plurality of multi-shaped cells. A double tubed tire is shown in Alderson U.S. Patent No. 1,389,729 of September 6, 1921.

A non-flattening, non-pneumatic tire according to the invention is characterised in that the inner tube member comprises a thick-walled tube of substantially natural soft rubber material having a durometer of 55 to 85, the ratio of outside diameter of the tube to the wall thickness thereof being in the range of from 2.00 to 7.50, and the length of said tube being at least about ½ inch (1.27 cm) longer than the length of the tire casing at its centre whereby the tube is compressed lengthwise within the casing. In such a tire the tube performs in most respects as a pneumatic tube, although the tube has no pressurised air.

In a preferred form, the tube is essentially round in cross-section, and has its end joined by vulcanizing together to form a ring. It also has a pair of shallow grooves spaced on either side of the midpoint of the inside of the ring and a series of circumferential peripheral flanges on the outside of the ring. The grooves ride in the rim flanges, and the peripheral flanges of the tube against the inside of the tire to negate any turning tendancies of the tube.

According to the invention there is also provided a method of forming a non-flattening, non-pneumatic tire, wherein a wheel with a tire seating rim, an inner tube member and a tire casing are provided, one bead of the tire casing is positioned on the wheel rim, the inner tube member is inserted into the casing and the remaining bead of the casing is then forced onto the wheel rim, the method being characterised in that the inner tube member is a thick-walled rubber tube having a length at least about ½ inch (1.27 cm) longer than the length of the casing at the centre of said tire casing, prior to insertion in the casing the tube is coated with a solution of lubricant, and the tube is forced into the casing so as to compress the tube lengthwise in the casing and is lubricated and pressed to a central position on the wheel rim before the remaining bead of the casing is forced onto the rim.

A better understanding of the invention will be had from the following detailed description which is given by way of example and with reference to the accompanying drawings, in which:-

Figure 1 is a partially cut away perspective of a vehicle tire tube according to the invention.

Figure 2 is a side view of the tube of Figure 1.

Figure 3 is a plan view of the tube of Figure 1.

Figure 4 is a cross-sectional configuration of the tube of Figure 1.

Figures 5, 6, 7 and 8 are profiles of the rim section of standard bicycle wheels for use with the tubes of the invention.

Figures 9 and 10 are cross-sections of a profile of rim sections showing the seating of a tire and tube therein.

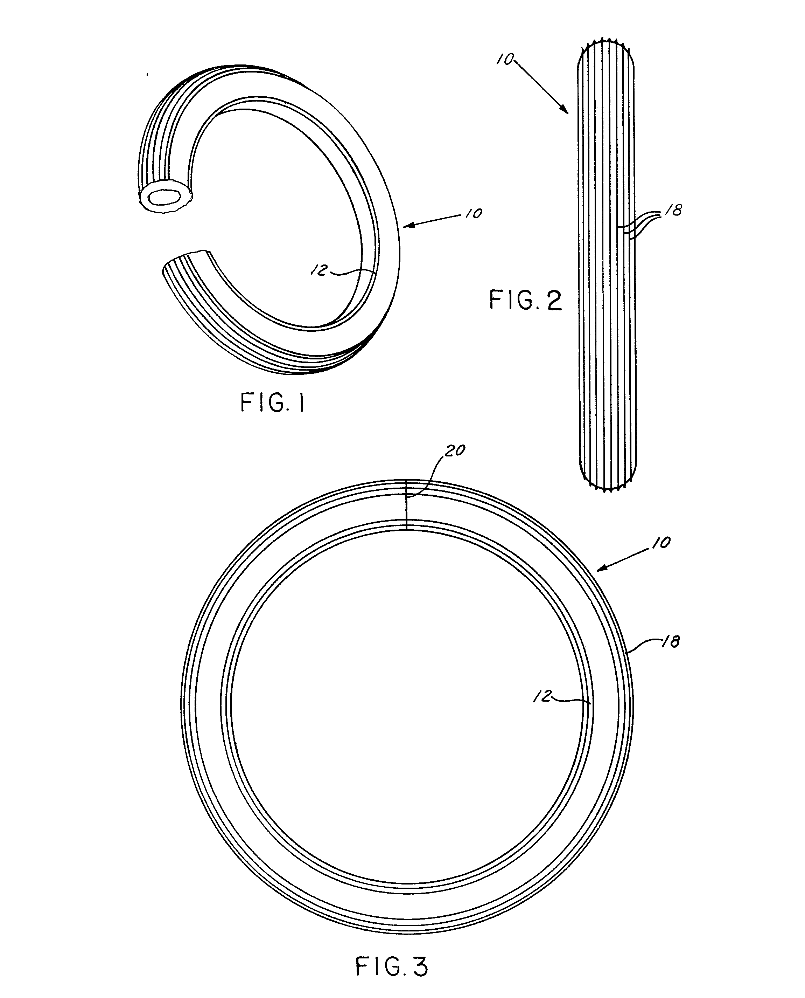

In the preferred embodiment shown in Figures 1 to 4, a tire, shown generally by numeral 10, is a ring of heavy walled tubing having shallow grooves 12 and 14 on either side of a vertical line through the midpoint 16 of the tube cross section. The grooves are arranged to seat in the rim flanges of the vehicle wheel to aid in the prevention of the tube from rolling in the tire. A plurality of peripheral flanges 18a to 18h extend around the ring of the tube to bear against the inside of the tire tread, further negating turning of the tube in the tire. The tube is formed into a ring by vulcanizing the face ends together, once the length is determined and it is cut to length.

The tube is preferably made of about 70% natural rubber with about 30% additives including about 5% of carbon black. The additives include clay, wax, antioxidants, accelerators, etc. The rubber has a durometer of 55 to 85, the length of the mid circumference of the tube is at least about one half inch (1.27 cm) longer than the actual circumference of the mid point of the tire. Thus the tube is larger than the tire, lengthwise, and some difficulty is found in forcing the tube into the tire. Usually the tire has one edge placed in the rim and the tube is inserted into the tire by compressing it lengthwise as it is inserted into the tire. When completely inserted into the tire, the free flange on the tire is forced into the rim so that both tire edges are seated in the rim flanges. The tube being non-pneumatic will not flatten under load even when punctured.

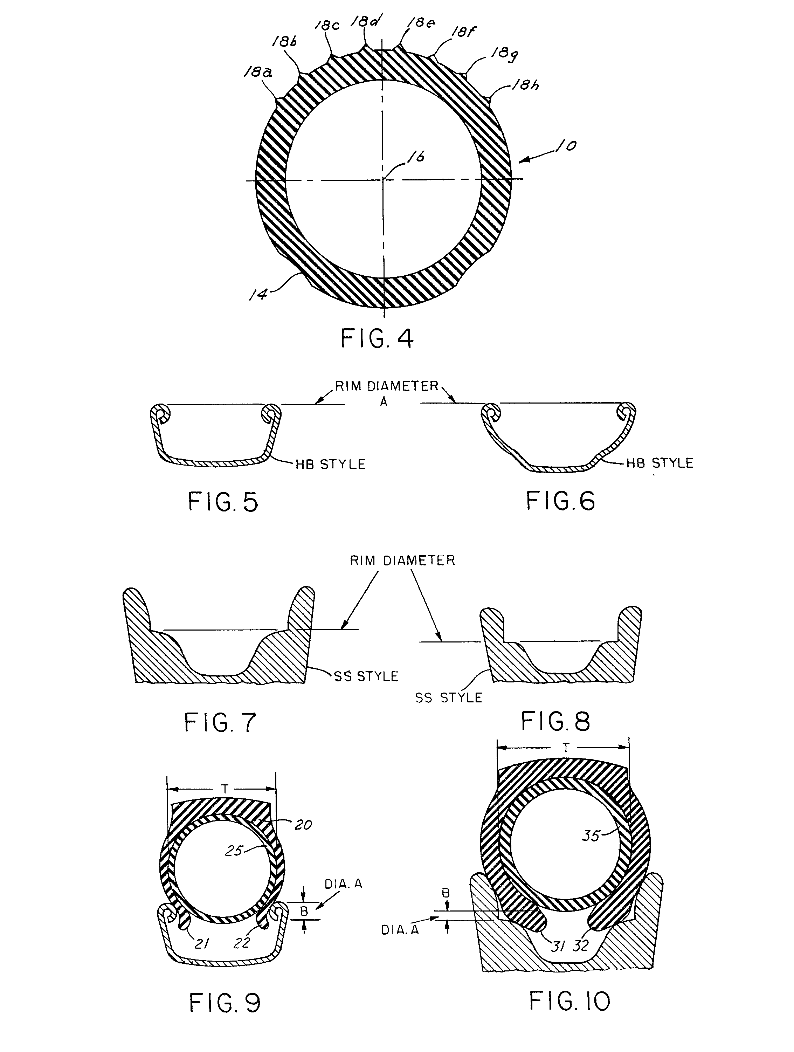

The rim configuration of Figures 5 and 6 are standard Tire and Rim Association HB configurations. Figure 5 covers HB1, HB2 and HB3 sizes as determined by The Tire and Rim Association standards for bicycle tires. Similarly, Figure 6 includes the sizes HB4, HB5, HB6 and HB7. The configuration of Figure 7 covers the SS style of bicycle rim including the numbers SS1 through SS6, and Figure 8 covers the sizes SS7 through SS10.

The general seating characteristics of bicycle tires are shown in Figures 9 and 10. In Figure 9, a tire casing 20 has its edges 21 and 22 in the HB rim (of Figure 5) and a tube 25 is mounted in the tire casing. Similarly, the SS style is shown in Figure 10, with a tire casing 30, edges 31 and 32 in the rim and a tube 35 mounted therein. The distance B in both styles is 0.125 inches (0.3175 cm) but for the HB style it is negative and positive for the SS style. The length of the tube is determined by using the formula

$$L = \frac{(A+2B) + (A+2B+2T)}{2}$$

Where: $A$ = the rim diameter;

$T$ = the tube cross-section diameter; and

$B = B_{HB}$ = -0.125 inch (-0.3175 cm) for HB style wheels, and

$B = B_{SS}$ = +0.125 inch (+0.3175 cm) for SS style wheels.

The actual tube length is greater than L by at least about $\frac{1}{2}$ inch (1.27 cm).

The following table demonstrates the size of the tubes, tires and the rims of some selected bicycles.

## TABLE I

| TIRE SIZE DESIGNATION | DESIGN RIM WIDTH | MAXIMUM OVERALL DIAMETER | APPROVED RIM CONTOURS | DIA. A + .015 | CIRC A + .047 | TUBE DIAMETER | NOMINAL TUBE LENGTH | TUBE LENGTH FOR T+0.125 | TUBE LENGTH FOR T-0.125 |
|---|---|---|---|---|---|---|---|---|---|
| 16x1.75 | .970 | 15.7 | HB4 | 12.625 | 39.662 | 1.500 | 43.590 | 43,982 | 43.197 |
| 20x2.125 | 1.062 | 20.5 | HB9 | 16.625 | 52.229 | 1.875 | 57.334 | 57.727 | 56.941 |
| 24x1.25 | .780 | 24.4 | HB2 | 22.062 | 69.310 | 1.000 | 71.666 | 72.059 | 71.273 |
| 26x1.375 | .780 | 26.7 | HB3 | 24.062 | 75.593 | 1.125 | 78.342 | 78.735 | 77.944 |
| 16x1/3/4 | .970 | 16.3 | SS7 | 12.480 | 39.207 | 1.500 | 44.705 | 45.098 | 44.312 |
| 24x1-3/8 | .800 | 24.4 | SS2 | 21.247 | 66.750 | 1.125 | 71.069 | 71.462 | 70.676 |
| 26x1-1/4 | .800 | 26.6 | SS5 | 23.515 | 73.875 | 1.000 | 77.802 | 78.194 | 77.409 |
| 27x1-1/4 | .800 | 27.4 | SS6 | 24.794 | 77.890 | 1.000 | 81.820 | 82.212 | 81.427 |

The configuration of standard rims for bicycles, approved by The Tire and Rim Association, are shown in Figures 5 to 8, are commonly used on most bicycles. The various dimensions for the values A and B are shown. The value of T is shown in the table, so that the length of the tube is found by knowing the type of rim and the size. In a similar manner, the SS type of rim is shown in Figure 10. The letters A and B are shown for inserting the values in the formula.

Other types of tires for light and medium duty end loads may use a similar tube for such as industrial vehicles and light trucks, including fork lifts, transfer wagons, etc., and light weight military vehicles as Jeeps, weapons carriers, etc. The same type of formula may be used to provide a heavy wall tube, having a length at least a half inch (1.27 cms) longer than the length of the mid-circumference of the tire. The thickwalled tubes do not flatten when punctured as they are not pneumatic. Further, they are mounted in the same manner as the bicycle tires, by forcing them in the tire bunching up the tube as it is inserted so that longer length of tube will fit in the tire.

For bicycle tires without pressurised air, a tube with a heavy wall which will not flatten under the weight of the bicycle rider should have a ratio of outside diameter to wall thickness in the range of 2.00 to 7.50. For tires having a diameter of $1\frac{1}{4}$ to 2 inches (3.175 to 5.08 cms) a range of from 4.00 to 6.50 is very satisfactory with a rubber durometer of 55 to 85. For control of ride quality, the durometer may be changed according to the weight of the bicycle rider. Thus, for lighter persons, the durometer is chosen at the lower end of the range, for example of 55-60. For heavier persons, the durometer of the rubber is chosen in the harder ranges, for example of 60-85. The outside diameter of the tube should be of about the same as the inside diameter of the tire casing with a length of about $\frac{1}{2}$ inch (1.27 cm) longer than the mid-circumference of the tire to provide a tight fit when the tube is forced into the tire casing.

The vehicles that are larger than bicycles, also, use tubes in about the same ratio of outside diameter to wall thickness and a similar range of durometer. The weight of the total load to be carried by each wheel is used to establish the range of O.D. to wall thickness; the heavier the load the lower the range, e.g. a thicker tube wall. Also, the durometer is taken in the higher range for heavier loads, and for light loads the lower durometer is used.

The tubes are made by extrusion, cut to desired length, and the ends vulcanized together. This is the process for all sizes of tubes. As stated before, the length of the tubes is determined by the formula above.

Installation of the tube and tire on a wheel is accomplished generally the same as with non-inflated air tubes, using, however, a liberal amount of lubricant; solution of soap, detergent, etc. One bead of the tire casing is placed on the rim of the wheel. A liberal amount of lubricant solution is placed around the rim over which the remaining tire bead is to be mounted. The tube is then covered with the lubricant solution and started into the tire casing from one side of the rim. The tube is continued to be inserted until some 2/3 or more is in the tire. The tube portion outside the tire bulges up, appearing too large for the tire. The remaining tube portion is then stuffed into the casing by circumferentially compressing the tube in the casing. Once inside the tire casing, the tube is again coated with lubricant solution and pushed to the centre of the rim. Additional lubricant is applied to the remaining tire bead, which is forced into the rim with tire tools, screw drivers or other flat iron. The beads are set in the rim by applying pressure on the beads completely around the rim. If the tools slip during installation, puncturing the tube will not make any difference to tube operation.

CLAIMS:

1.        A non-flattening, non-pneumatic tire comprising a tire casing (20) mounted on a wheel rim and an inner tube member disposed within the casing, characterised in that the inner tube member comprises a thick-walled tube (10; 25; 35) of substantially natural soft rubber material having a durometer of 55 to 85, the ratio of outside diameter of the tube to the wall thickness thereof being in the range of from 2.00 to 7.50, and the length of said tube being at least about $\frac{1}{2}$ inch (1.27 cm) longer than the length of the tire casing (20) at its centre whereby the tube is compressed lengthwise within the casing.

2.        A non-flattening, non-pneumatic tire according to claim 1, wherein said tube (25) has its two ends vulcanized together to form a ring.

3.        A non-flattening, non-pneumatic tire according to claim 1 or 2, wherein the length of the tube (25) is determined by the formula

$$L = \frac{(A+2B) + (A+2B+2T)}{2}$$

Where A = the wheel rim diameter;

T = the tube cross-section diameter; and

B = -0.125 inch (-0.3175 cm) for HB wheel rim configurations, and

B = +0.125 inch (+0.3175 cm) for SS wheel rim configurations,

the actual tube length being greater than L by at least about $\frac{1}{2}$ inch (1.27 cm).

4.        A method of forming a non-flattening, non-pneumatic rubber tired wheel, wherein a wheel with a tire seating rim, an inner tube member and a tire casing are provided, one bead (21, 22; 31, 32) of the tire casing (25) is positioned on the rim of said wheel, the inner tube member is inserted into said tire casing, and the remaining bead of said tire casing is forced into the rim of said wheel, characterised in that the inner tube member is a thick-walled rubber tube (25; 35) having a length of at least about $\frac{1}{2}$ inch (1.27 cm) longer than the length of the casing at the centre of said tire casing.    Prior to insertion in the casing the tube is coated with a solution of lubricant, and the tube is forced into the casing so as to compress the tube lengthwise in the casing and is lubricated and pressed to a central position on the wheel rim before the remaining bead of the casing is forced onto the rim.

FIG. 1

FIG. 2

FIG. 3

FIG. 4

RIM DIAMETER
A

HB STYLE

FIG. 5

HB STYLE

FIG. 6

RIM DIAMETER

SS STYLE

FIG. 7

SS STYLE

FIG. 8

FIG. 9

FIG. 10

## DOCUMENTS CONSIDERED TO BE RELEVANT

| Category | Citation of document with indication, where appropriate, of relevant passages | Relevant to claim |
|---|---|---|
| | CH - A - 330 053 (A. ZIPPEL)<br>  * Whole document * | 1-4 |
| | -- | |
| | FR - A - 2 176 622 (G. ROGET)<br>  * Page 3, line 5 to page 4, line 4; claims 1,6 * | 1,2,4 |
| | -- | |
| A | GB - A - 1 524 472 (THE GOODYEAR TIRES & RUBBER) | |
| AD | US - A - 1 585 875 (M.R. PRICE) | |
| AD | US - A - 2 017 649 (J. BRUNSWICK) | |
| AD | US - A - 1 439 197 (J.H. SMITH) | |
| AD | US - A - 1 449 588 (F.A. CONNOLLY) | |
| AD | US - A - 1 389 729 (W. ALDERSON) | |
| | ---- | |

**CLASSIFICATION OF THE APPLICATION (Int. Cl. ⁴)**

B 60 C 7/10
7/12

**TECHNICAL FIELDS SEARCHED (Int.Cl. ³)**

B 60 C 7/12
7/10
7/00
7/24

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 08-12-1980 | FRIDEN |

EPO Form 1503.1  06.78